# EUROPÄISCHE PATENTSCHRIFT

(11) **EP 3 274 225 B1**
(45) Veröffentlichungstag und Bekanntmachung des Hinweises auf die Patenterteilung: **12.05.2021**
(21) Anmeldenummer: 16711571.6
(22) Anmeldetag: 16.03.2016
(51) Int. Cl.: B60T 8/32

(54) **VERFAHREN ZUR AUSLÖSUNG EINES SELBSTTÄTIGEN NOTBREMSVORGANGS MIT VARIABLER WARNZEITDAUER**
METHOD FOR TRIGGERING AN AUTOMATIC EMERGENCY BRAKING PROCESS WITH VARIABLE WARNING TIME PERIOD
PROCÉDÉ SERVANT À DÉCLENCHER UNE OPÉRATION DE FREINAGE D'URGENCE AUTONOME PRÉSENTANT UN TEMPS VARIABLE D'AVERTISSEMENT

(30) Priorität: 26.03.2015 DE 102015104547
(43) Veröffentlichungstag der Anmeldung: 31.01.2018
(73) Patentinhaber: KNORR-BREMSE Systeme für Nutzfahrzeuge GmbH, 80809 München (DE)
(72) Erfinder: HECKER, Falk, 71706 Markgröningen (DE); GÜCKER, Ulrich, 71701 Schwieberdingen (DE); KRABOT, Matyas, 2310 Szigetszentmiklós (HU); KLEIN, Markus, 75181 Pforzheim (DE); DOCZY, Csaba, 1213 Budapest (HU); JOZSA, Gergely, 1171 Budapest (HU); ROZSA, Tamas, 1173 Budapest (HU)
(86) Internationale Anmeldenummer: PCT/EP2016/055724
(87) Internationale Veröffentlichungsnummer: WO 2016/162178

(56) Entgegenhaltungen:
- DE-A1-102014 008 431
- JP-A- 2005 225 447
- US-A1- 2006 097 570
- US-A1- 2009 038 873

## Beschreibung

Die Erfindung geht aus von einem Verfahren zur Auslösung eines selbsttätigen Notbremsvorgangs bei einem Fahrzeug zur Vermeidung eines Auffahrens auf ein Hindernis wie ein vorausfahrendes Fahrzeug, wobei eine Fahrerwarnung ausgelöst wird, wenn wenigstens eine Warnbedingung erfüllt ist, wobei die Erfüllung der Warnbedingung angibt, dass aufgrund der momentanen Fahrsituation des Fahrzeugs relativ zum Hindernis der selbsttätige Notbremsvorgang auszulösen ist, wobei der selbsttätige Notbremsvorgang erst nach Auslösung der Fahrerwarnung und anschließendem Ablauf einer Warnzeitdauer ausgelöst wird, wobei der selbsttätige Notbremsvorgang erst nach Auslösung der Fahrerwarnung und anschließendem Ablauf einer Warnzeitdauer ausgelöst wird, wobei die Warnzeitdauer abhängig von einer anhand einer Sensoreinrichtung erfassten Relativbewegungssituation zwischen dem Fahrzeug und dem Hindernis eingestellt und/ oder abhängig von einer sich zeitlich ändernden und anhand der Sensoreinrichtung erfassten Relativbewegungssituation zwischen dem Fahrzeug und dem Hindernis angepasst wird, gemäß dem Oberbegriff von Anspruch 1.

Weiterhin geht die Erfindung aus von einer Vorrichtung zur Durchführung eines selbsttätigen Notbremsvorgangs bei einem Fahrzeug zur Vermeidung eines Auffahrens auf ein Hindernis wie ein vorausfahrendes Fahrzeug, welche eine Auswerteeinrichtung und eine Sensoreinrichtung beinhaltet, wobei von einer Auswerteeinrichtung eine Fahrerwarnung ausgelöst wird, wenn wenigstens eine in der Auswerteeinrichtung abgelegte Warnbedingung erfüllt ist, wobei die Erfüllung der Warnbedingung angibt, dass aufgrund der momentanen Fahrsituation des Fahrzeugs relativ zum Hindernis der selbsttätige Notbremsvorgang auszulösen ist, wobei der selbsttätige Notbremsvorgang von der Auswerteeinrichtung erst nach Auslösung der Fahrerwarnung und anschließendem Ablauf einer Warnzeitdauer ausgelöst wird, wobei die Auswerteeinrichtung ausgebildet ist, dass sie die Warnzeitdauer abhängig von einer anhand der Sensoreinrichtung erfassten Relativbewegungssituation zwischen dem Fahrzeug und dem Hindernis einstellt und/oder abhängig von einer sich zeitlich ändernden, anhand einer Sensoreinrichtung erfassten Relativbewegungssituation zwischen dem Fahrzeug und dem Hindernis anpasst, gemäß dem Oberbegriff von Anspruch 6.

Ein solches Verfahren und eine solche Vorrichtung sind aus EP 1 539 523 B1 bekannt. Dort wird der selbsttätige Notbremsvorgang erst nach Ablauf einer Warnzeitdauer ausgelöst, während der dem Fahrer die Möglichkeit gegeben wird, durch Eingreifen in Form einer Fahrerbremsanforderung den selbsttätigen Notbremsvorgang zu vermeiden. Die Warnzeitdauer ist dabei zeitlich in zwei Stufen unterteilt, wobei gemäß einer ersten Warnstufenzeitdauer eine optische und/oder akustische Fahrerwarnung ausgegeben wird. Falls der Fahrer darauf nicht reagiert, dann wird im Rahmen einer zweiten Warnstufenzeitdauer eine Teilbremsung mit einer Teilbremsverzögerung eingeleitet, die kleiner als eine vorgegebene (maximale) Notbremsverzögerung ist. Erst wenn der Fahrer auch die zweite Warnstufenzeitdauer verstreichen lässt, ohne dass er die Bremse betätigt, dann wird der Notbremsvorgang automatisch ausgelöst. Im Rahmen der Warnzeitdauer hat der Fahrer daher die Möglichkeit, die Gefahrensituation durch Betätigen der Bremse abzuwenden. Dort wird auch ein Abbruchkriterium beschrieben, wonach die Fahrerwarnung abgebrochen wird, falls sich die Entfernung zum Hindernis vergrößert oder die Relativgeschwindigkeit in Bezug zum vorausfahrenden Fahrzeug derart verkleinert, dass entsprechende vorbestimmte Grenzwerte überschritten werden.

Gemäß US 2006/0097570 A1 wird der selbsttätige Notbremsvorgang ebenfalls erst nach Ablauf einer Warnzeitdauer ausgelöst, während der dem Fahrer die Möglichkeit gegeben wird, durch Eingreifen in Form einer Fahrerbremsanforderung den selbsttätigen Notbremsvorgang zu vermeiden.

Dabei ist die Warnzeitdauer jeweils fest vorgegeben oder wird abhängig von der Fahrzeugmasse, dem Belagreibwert der Radbremseinrichtungen des Fahrzeugs, der Fahrbahnbeschaffenheit oder der Sichtverhältnisse eingestellt.

Der vorliegenden Erfindung liegt demgegenüber die Aufgabe zugrunde, das gattungsgemäße Verfahren bzw. die gattungsgemäße Vorrichtung hinsichtlich der vorliegenden Verkehrssituation besser anzupassen.

Diese Aufgabe wird erfindungsgemäß durch die Merkmale der Ansprüche 1 und 6 gelöst. Vorteilhafte Weiterbildungen der Erfindung sind Gegenstand der beigefügten Unteransprüche.

### Offenbarung der Erfindung

Das erfindungsgemäße Verfahren geht davon aus, dass
a) eine Anfangs-Warnzeitdauer zum Zeitpunkt des Auslösens der Fahrerwarnung auf der Basis der zu diesem Zeitpunkt vorliegenden Relativbewegungssituation zwischen dem Fahrzeug und dem Hindernis eingestellt und dann nicht mehr verändert wird, oder dass
b) ausgehend von einer Anfangs-Warnzeitdauer, die zum Zeitpunkt des Auslösens der Fahrerwarnung vorgegeben ist oder erst auf der Basis der zu diesem Zeitpunkt vorliegenden Relativbewegungssituation zwischen dem Fahrzeug und dem Hindernis eingestellt wird, die Warnzeitdauer nach bereits erfolgter Auslösung der Fahrerwarnung abhängig von der dann jeweils vorliegenden Relativbewegungssituation zwischen dem Fahrzeug und dem Hindernis angepasst wird, wobei
   b1) für den Fall, dass nach Auslösung der Fahrerwarnung das Hindernis verzögert, die Warnzeitdauer auf der Basis der dann vorliegenden Relativbewegungssituation zwischen dem Fahrzeug und dem Hindernis gegenüber der Anfangs-Warnzeitdauer verkürzt wird, und/oder
   b2) für den Fall, dass nach Auslösung der Fahrerwarnung das Hindernis beschleunigt, die Warnzeitdauer auf der Basis der dann vorliegenden Relativbewegungssituation zwischen dem Fahrzeug und dem Hindernis gegenüber der Anfangs-Warnzeitdauer verlängert wird.

Die erfindungsgemäße Vorrichtung geht davon aus, dass die Auswerteeinrichtung weiterhin ausgebildet ist, dass sie
a) eine Anfangs-Warnzeitdauer zum Zeitpunkt des Auslösens der Fahrerwarnung auf der Basis der zu diesem Zeitpunkt vorliegenden Relativbewegungssituation zwischen dem Fahrzeug und dem Hindernis einstellt und dann nicht mehr verändert, oder dass sie
b) ausgehend von einer Anfangs-Warnzeitdauer, die sie zum Zeitpunkt des Auslösens der Fahrerwarnung vorgibt oder erst auf der Basis der zu diesem Zeitpunkt vorliegenden Relativbewegungssituation zwischen dem Fahrzeug und dem Hindernis einstellt, die Warnzeitdauer nach bereits erfolgter Auslösung der Fahrerwarnung abhängig von der dann jeweils vorliegenden Relativbewegungssituation zwischen dem Fahrzeug und dem Hindernis anpasst, wobei sie
   b1) für den Fall, dass nach Auslösung der Fahrerwarnung das Hindernis verzögert, die Warnzeitdauer auf der Basis der dann vorliegenden Relativbewegungssituation zwischen dem Fahrzeug und dem Hindernis gegenüber der Anfangs-Warnzeitdauer verkürzt, und/oder
   b2) für den Fall, dass nach Auslösung der Fahrerwarnung das Hindernis beschleunigt, die Warnzeitdauer auf der Basis der dann vorliegenden Relativbewegungssituation zwischen dem Fahrzeug und dem Hindernis gegenüber der Anfangs-Warnzeitdauer verlängert.

Unter einem Hindernis ist dabei entweder ein fest stehendes Hindernis, ein Hindernis in Form eines vorausfahrenden oder in die Fahrspur des betreffenden Fahrzeugs einscherendes Fahrzeug oder ein die Fahrspur des betreffenden Fahrzeugs in einem beliebigen Winkel kreuzendes Fahrzeug zu verstehen.

Mit anderen Worten wird die Warnzeit- dauer nicht wie in der eingangs genannten EP 1 539 523 B1 fest vorgegeben oder lediglich in Abhängigkeit von Größen wie der Fahrzeugmasse, dem Belagreibwert der Radbremseinrichtungen des Fahrzeugs, der Fahrbahnbeschaffenheit oder der Sichtverhältnisse eingestellt, welche sich nicht auf das stehende Hindernis bzw. das einscherende oder vorausfahrende Fahrzeug beziehen, sondern gerade auf Größen, welche sich auf die Relativbewegungssituation zwischen dem Fahrzeug und dem Hindernis beziehen. Dadurch ergibt sich eine an die jeweilige Verkehrssituation besser angepasste variable oder dynamische Warnzeitdauer. In vorteilhafter Weise wird daher die Warnzeitdauer dann an die gerade vorliegende Verkehrssituation des Fahrzeugs in Bezug zum Hindernis angepasst.

Falls beispielsweise das Hindernis z.B. in Form eines vorausfahrenden Fahrzeugs verzögert, dann wird die Warnzeitdauer auf der Basis der dann vorliegenden Relativbewegungssituation zwischen dem Fahrzeug und dem Hindernis gegenüber einer vorgegebenen oder eingestellten Anfangs-Warnzeitdauer beispielsweise verkürzt. Denn wenn nach Ablauf der Warnzeitdauer der Notbremsvorgang mit maximaler Notbremsverzögerung stattfindet, wofür eine gewisse Notbremsverzögerungszeit notwendig ist, um einen Sicherheitsabstand zum Hindernis einzuhalten, so steht in diesem Fall weniger Eingriffszeit (Warnzeitdauer) für den Fahrer zur Verfügung. Würde man in einem solchen Fall eine Warnzeitdauer unabhängig von der Relativbewegungssituation fest vorgegeben, so besteht die Gefahr, dass diese zu lang ist und dass demzufolge das betreffende Fahrzeug mit dem Hindernis kollidiert.

Im Gegensatz dazu wird die Warnzeitdauer beispielsweise verlängert, wenn das Hindernis z.B. in Form eines vorausfahrenden Fahrzeugs beschleunigt. Denn in diesem Fall steht dem Fahrer mehr Zeit zur Verfügung, mit einem Bremsmanöver aktiv einzugreifen.

Beispielsweise wird eine Anfangs-Warnzeitdauer zum Zeitpunkt des Auslösens der Fahrerwarnung auf der Basis der zu diesem Zeitpunkt vorliegenden Relativbewegungssituation zwischen dem Fahrzeug und dem Hindernis eingestellt und dann, d.h. in deren weiterem Verlauf nicht mehr verändert. Mit anderen Worten wird die Warnzeitdauer zum Zeitpunkt des Auslösens der Fahrerwarnung auf der Basis der zu diesem Zeitpunkt vorliegenden Relativbewegungssituation zwischen dem Fahrzeug und dem Hindernis einmalig eingestellt und dann nicht mehr verändert.

Gemäß einer alternativen Vorgehensweise ist vorgesehen, dass ausgehend von einer Anfangs-Warnzeitdauer, die zum Zeitpunkt des Auslösens der Fahrerwarnung vorgegeben ist oder erst auf der Basis der zu diesem Zeitpunkt vorliegenden Relativbewegungssituation zwischen dem Fahrzeug und dem Hindernis eingestellt wird, die Warnzeitdauer nach bereits erfolgter Auslösung der Fahrerwarnung abhängig von der dann jeweils vorliegenden Relativbewegungssituation zwischen dem Fahrzeug und dem Hindernis angepasst wird. Mit anderen Worten wird in diesem Fall eine fest vorgegebene oder eine auf der Basis der zu dem Zeitpunkt vorliegenden Relativbewegungssituation zwischen dem Fahrzeug und dem Hindernis eingestellte Warnzeitdauer, bei dem die Fahrerwarnung ausgelöst wird, abhängig von der nach diesem Zeitpunkt vorliegenden Relativbewegungssituation zwischen dem Fahrzeug und dem Hindernis angepasst. Eine solche Anpassung kann insbesondere einmalig oder in bestimmten Zeitabständen oder zyklisch mehrmalig erfolgen.

Für den Fall, dass nach Auslösung der Fahrerwarnung das Hindernis verzögert, wird die Warnzeitdauer auf der Basis der dann vorliegenden und veränderten Relativbewegungssituation zwischen dem Fahrzeug und dem Hindernis gegenüber der Anfangs-Warnzeitdauer verkürzt. Denn dann steht dem Fahrer aufgrund einer begrenzten Notbremsverzögerungszeit weniger Eingriffszeit zur Verfügung, wie bereits weiter oben erläutert wurde.

Andernfalls, also wenn nach Auslösung der Fahrerwarnung das Hindernis beschleunigt, so wird die Warnzeitdauer auf der Basis der dann vorliegenden und veränderten Relativbewegungssituation zwischen dem Fahrzeug und dem Hindernis gegenüber der Anfangs-Warnzeitdauer verlängert. Denn dann verbleibt dem Fahrer mehr Eingriffszeit, ohne dass Gefahr besteht, dass das Fahrzeug mit dem Hindernis kollidiert.

Durch die in den Unteransprüchen aufgeführten Maßnahmen sind vorteilhafte Weiterbildungen und Verbesserungen der Erfindung möglich.

Da die Auswertung von Sensordaten von Sensoren in der Auswerteeinrichtung, welche die Relativbewegungssituation zwischen dem Fahrzeug und dem Hindernis erfassen, in der Regel zyklisch, d.h. in bestimmten Zeitabständen erfolgt, wird auch die Warnzeitdauer bevorzugt zyklisch eingestellt oder angepasst.

Bei der Relativbewegungssituation zwischen dem Fahrzeug und dem Hindernis wird bevorzugt wenigstens eine der folgenden Größen berücksichtigt, wobei die Aufzählung nicht abschließend ist: Die Geschwindigkeit und/oder die Beschleunigung des Fahrzeugs in Fahrtrichtung und/oder quer zur Fahrtrichtung, die Geschwindigkeit und/oder die Beschleunigung des Hindernisses in Fahrtrichtung und/oder quer zur Fahrtrichtung, die Relativgeschwindigkeit und/oder die Relativbeschleunigung zwischen dem Fahrzeug und dem Hindernis in Fahrtrichtung und/oder quer zur Fahrtrichtung, der Abstand zwischen dem Fahrzeug und dem Hindernis in Fahrtrichtung und/oder quer zur Fahrtrichtung. Unter "in Fahrtrichtung und/oder quer zur Fahrtrichtung" ist auch eine Richtung in einem beliebigen Winkel zur Fahrtrichtung zu verstehen.

Besonders bevorzugt beinhaltet die Warnzeitdauer als Gesamtwarnzeitdauer eine erste Warnzeitdauer und eine zweite Warnzeitdauer, wobei während der ersten Warnzeitdauer optische und/oder akustische Signale ausgegeben werden und im Rahmen der sich an die erste Warnzeitdauer unmittelbar anschließende zweite Warnzeitdauer eine Teilbremsung mit einer Teilbremsverzögerung kleiner als eine maximale Notbremsverzögerung durchgeführt wird.

Gemäß einer Weiterbildung dieser Ausführung wird/werden die Gesamtwarnzeitdauer und/oder die zweite Warnzeitdauer abhängig von der Relativbewegungssituation zwischen dem Fahrzeug und dem Hindernis eingestellt und/oder abhängig von einer sich zeitlich ändernden Relativbewegungssituation zwischen dem Fahrzeug und dem Hindernis angepasst. Dabei ist die erste Warnzeitdauer beispielsweise fest vorgegeben.

Die Erfindung betrifft auch ein Fahrzeug mit einer Vorrichtung wie oben beschrieben.

### Zeichnung

Die Erfindung wird nachstehend anhand eines Ausführungsbeispiels unter Bezugnahme auf die beigefügte Zeichnung näher beschrieben. Es zeigen:
- Fig. 1: einen schematischen Ablaufplan einer bevorzugten Ausführungsform des erfindungsgemäßen Verfahrens;
- Fig.2: ein Diagramm, auf welchem die Beschleunigung a und die Geschwindigkeit v eines Fahrzeugs sowie der Abstand d zu einem vorausfahrenden Fahrzeug in Abhängigkeit von der Zeit t nach Auslösen einer Fahrerwarnung aufgetragen ist.

### Beschreibung des Ausführungsbeispiels

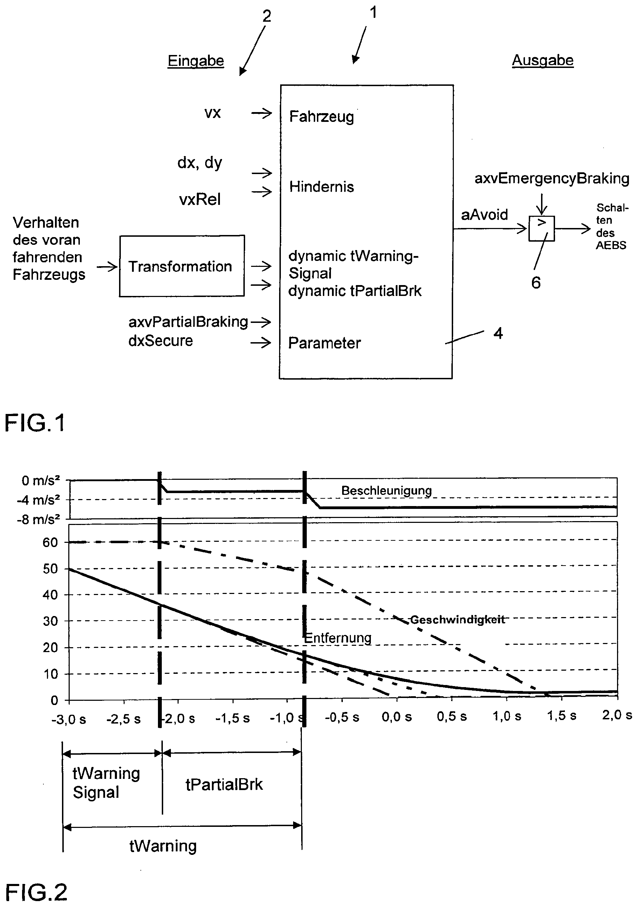

Der in Fig. 1 gezeigte Ablaufplan einer bevorzugten Ausführungsform eines Verfahrens zur Auslösung eines selbsttätigen Notbremsvorgangs bei einem Fahrzeug zur Vermeidung eines Auffahrens auf ein Hindernis beinhaltet generell ein Auslösen einer Fahrerwarnung, wenn wenigstens eine Warnbedingung erfüllt ist, wobei die Erfüllung der Warnbedingung angibt, dass aufgrund der momentanen Fahrsituation des Fahrzeugs relativ zum Hindernis der selbsttätige Notbremsvorgang auszulösen ist. Der selbsttätige Notbremsvorgang wird aber erst nach Auslösung der Fahrerwarnung und anschließendem Ablauf einer Gesamtwarnzeitdauer tWarning ausgelöst. Mit anderen Worten wird dem Fahrer innerhalb einer Gesamtwarnzeitdauer tWarning durch die Fahrerwarnung z.B. in Form von optischen oder akustischen Signalen Gelegenheit gegeben, das Fahrzeug durch einen von ihm selbst initiierten Bremseingriff abzubremsen, ohne dass danach der selbsttätige Notbremsvorgang ausgelöst wird. Versäumt der Fahrer hingegen, innerhalb der Gesamtwarnzeitdauer tWarning auf die Fahrerwarnung zu reagieren, beispielsweise in Form von Bremsen, Lenken, Blinken, Kickdown-Betätigung des Gaspedals oder Ausschalten der AEBS-Funktion, so wird der selbsttätige Notbremsvorgang ausgelöst. Diese Funktion wird auch AEBS-Funktion genannt und kann mittels eines AEBS-Schalters aktiviert oder deaktiviert werden.

Zunächst wird die momentane Fahrsituation des Fahrzeugs und insbesondere eine Relativbewegungssituation in Bezug zu einem Hindernis erfasst, hier beispielsweise in Bezug zu einem vorausfahrenden Fahrzeug. Dazu verfügt das Fahrzeug über eine Vorrichtung 1 zur Durchführung eines selbsttätigen Notbremsvorgangs, die eine Relativbewegungssituation zwischen dem Fahrzeug und einem Hindernis wie einem vorausfahrenden Fahrzeug erfassende Sensoreinrichtung 2 beinhaltet, wobei hier beispielsweise als das Fahrzeug selbst (ego vehicle) betreffende Größe die Geschwindigkeit vₓ des Fahrzeugs in Fahrtrichtung x und als das Hindernis (obstacle) betreffende Größen der Abstand dx, dy des Fahrzeugs zum vorausfahrenden Fahrzeug in Fahrtrichtung x und in Querrichtung y dazu sowie die Relativgeschwindigkeit v_{xRel} in Fahrtrichtung des Fahrzeugs in Bezug zum vorausfahrenden Fahrzeug erfasst werden. Diese Größen werden in eine Auswerteeinrichtung 4 eingesteuert.

Weiterhin werden in die Auswerteeinrichtung 4 als vorgegebene Größen (parameters) z.B. aus einem Speicher eine Teilbremsverzögerung a_{xvPartialBraking} in Fahrtrichtung x sowie ein Sicherheitsabstand dxsecure des Fahrzeugs in Bezug zum vorausfahrenden Fahrzeug in Fahrtrichtung x eingelesen. Die Teilbremsverzögerung a_{xvPartialBra-king} im Rahmen einer zweiten Warnstufe einer noch weiter unten erläuterten Fahrerwarnung als beispielsweise vorgegebene Größe verwendet. Der Sicherheitsabstand d_{xSecure} des Fahrzeugs in Bezug zum vorausfahrenden Fahrzeug in Fahrtrichtung x stellt einen zu erzielenden Abstand dar, welcher entweder durch einen durch den Fahrer selbst eingeleiteten Bremsvorgang und/oder durch einen automatisch ausgelösten Notbremsvorgang zu erzielen ist.

Darüber hinaus wird aus dem bisherigen Verhalten des vorausfahrenden Fahrzeugs auf der Basis der durch die Sensoreinrichtung 2 erfassten Größen eine dynamische erste Warnzeitdauer tWarningSignal sowie eine dynamische zweite Warnzeitdauer tPartialBrk ermittelt. Dynamisch bedeutet, dass die beiden Warnzeitdauern tWarningSignal und tPartialBrk nicht fest vorgegeben sind, sondern einstell- bzw. anpassbare Größen darstellen. Auf welcher Grundlage die Einstellung bzw. Anpassung erfolgen kann, wird noch später erläutert.

Während die dynamische erste Warnzeitdauer tWarningSignal angibt, dass während dieser Zeitdauer ein optisches und/oder akustisches Signal von einer Signaleinrichtung erzeugt wird, um den Fahrer zum Eingreifen z.B. durch aktives Bremsen, durch Lenken, Blinken, Kickdown-Betätigung des Gaspedals oder Ausschalten der AEBS-Funktion am AEBS-Schalter zu animieren, stellt die dynamische zweite Warnzeitdauer tPartialBrk eine Zeitdauer dar, während welcher die Auswerteeinrichtung 4 ein Signal an eine hier nicht gezeigte Bremseinrichtung sendet, um eine Teilbremsung mit einer Teilbremsverzögerung auszulösen, die kleiner als eine maximale Notbremsverzögerung ist, die beispielsweise im Rahmen der automatisch ausgelösten Notbremsvorgangs wirkt.

Wie aus Fig.2 hervorgeht, ist der zweiten Warnzeitdauer tPartialBrk die erste Warnzeitdauer tWarningSignal zeitlich vorgeordnet, während welcher dem Fahrer mittels eines optischen und/oder akustischen Signals einer von der Auswerteeinrichtung 4 durch ein entsprechendes elektrisches Signal gesteuerten hier nicht gezeigten Signaleinrichtung ein Hinweis gegeben wird, einzugreifen, beispielsweise durch aktives Bremsen, durch Lenken, Blinken, Kickdown-Betätigung des Gaspedals oder Ausschalten der AEBS-Funktion am AEBS-Schalter.

Falls der Fahrer innerhalb der ersten Warnzeitdauer tWarningSignal reagiert und z.B. durch aktives Bremsen oder Lenken wenigstens den Sicherheitsabstand d_{xSecure} des Fahrzeugs in Bezug zum vorausfahrenden Fahrzeug in Fahrtrichtung x und/oder quer dazu herzustellt, so wird das Verfahren beendet. Falls jedoch der Fahrer nicht oder in nicht ausreichendem Maße reagiert, so wird automatisch die dynamische zweite Warnzeitdauer tPartialBrk in Gang gesetzt, während welcher ohne ein Zutun des Fahrers die Auswerteeinrichtung ein Signal an die Bremseinrichtung sendet, um eine Teilbremsung mit der Teilbremsverzögerung auszulösen. Erst wenn der Fahrer auf dieses haptisch erfassbare Teilbremsen nicht oder nicht ausreichend reagiert, beispielsweise durch aktives Bremsen, Lenken, Blinken, Kickdown-Betätigung des Gaspedals oder Ausschalten der AEBS-Funktion am AEBS-Schalter, dann wird von der Auswerteeinrichtung 4 an die Brem- seinrichtung ein Signal gesendet, welches einen Notbremsvorgang mit maximaler Notbremsverzögerung oder mit einer bedarfsgerechten beispielsweise geregelten Verzögerung auslöst.

Die dynamische Gesamtwarnzeitdauer tWarning setzt sich demnach aus einer dynamischen ersten Warnzeitdauer tWarningSignal und einer dynamischen zweiten Warnzeitdauer tPartialBrk zusammen. Ein in die Auswerteeinrichtung integrierter Zeitzähler überwacht den Ablauf der Gesamtwarnzeitdauer tWarning bzw. der ersten Warnzeitdauer tWarningSignal bzw. der zweiten Warnzeitdauer tPartialBrk.

Aus den erfassten Eingangsgrößen bestimmt die Auswerteeinrichtung eine Kollisionsvermeidungsverzögerung aAvoid, mit welcher das Fahrzeug abgebremst werden müsste, um wenigstens den notwendigen Sicherheitsabstand d_{xSecure} des Fahrzeugs in Bezug zum vorausfahrenden Fahrzeug in Fahrtrichtung x zu erzielen. In einem Vergleicher 6 der Auswerteeinrichtung 4 wird der ermittelte Wert für die Kollisionsvermeidungsverzögerung aAvoid mit einer Notbremsverzögerung axvEmergencyBraking verglichen, die beispielsweise die Bremseinrichtung des Fahrzeugs maximal aufbringen kann. Die Notbremsverzögerung axvEmergencyBraking stellt insbesondere einen fest vorgegebenen Schwellwert dar.

Falls der Vergleicher 6 feststellt, dass der ermittelte Wert für die Kollisionsvermeidungsverzögerung aAvoid kleiner oder gleich in Bezug zur Notbremsverzögerung axvEmergencyBraking ist, so wird keine Fahrerwarnung in Kombination mit einem automatischen Notbremsvorgang ausgelöst. Ist hingegen der ermittelte Wert für die Kollisionsvermeidungsverzögerung aAvoid größer als die Notbremsverzögerung axvEmergencyBraking, so wird die Fahrerwarnung mit Gesamtwarnzeitdauer tWarning und eventuell automatisch ausgelöstem Notbremsvorgang in Gang gesetzt (Trigger of AEBS).

Die Auswerteeinrichtung 4 ist weiterhin ausgebildet, dass oben beschriebenen Schritte des Erfassens der Größen, Berechnung, Vergleich etc. in Zyklen oder zyklisch durchlaufen werden, so dass bei aktiviertem Verfahren bzw. bei aktivierter Vorrichtung ständig eine entsprechende Kollisionsüberwachung stattfindet.

Wie oben bereits angedeutet, wird (werden) die erste Warnzeitdauer tWarningSignal und/oder die zweite Warnzeitdauer tPartialBrk abhängig von der Relativbewegungssituation zwischen dem Fahrzeug und dem vorausfahrenden Fahrzeug dynamisch eingestellt und/oder abhängig von einer sich zeitlich ändernden Relativbewegungssituation zwischen dem Fahrzeug und dem Hindernis dynamisch angepasst. Diese dynamische Anpassung gilt dann auch für die Gesamtwarnzeitdauer tWarning, welche sich ja aus den beiden Warnzeitdauern tWarningSignal und tPartialBrk zusammensetzt.

Einstellung oder Anpassung der Gesamtwarnzeitdauer tWarning und/oder der ersten Warnzeitdauer tWarningSignal und/oder der zweiten Warnzeitdauer tPartialBrk bedeutet, dass diese Größe(n) auf der Basis der zum Zeitpunkt des festgestellten Ergebnisses des im Vergleicher 6 angestellten Vergleichs, dass die Kollisionsvermeidungsverzögerung aAvoid größer als die Notbremsverzögerung axvEmergencyBraking ist vorliegenden Relativbewegungssituation zwischen dem Fahrzeug und dem vorausfahrenden Fahrzeug eingestellt wird (werden).

Falls beispielsweise das voraus fahrende Fahrzeug für eine gewisse Zeitdauer vor dem betreffenden Fahrzeug in einem Abstand herfährt, der keinerlei Eingriff seitens der Auswerteeinrichtung erfordert, d.h. es ist kein selbsttätiger Notbremsvorgang in Kombination mit vorangehender Warnzeit notwendig, so wird dennoch eine (dann theoretische) Gesamtwarnzeitdauer tWarning und/oder erste Warnzeitdauer tWarningSignal und/oder zweite Warnzeitdauer tPartialBrk als Ausgangswert(e) bestimmt.

Falls dann nach einer gewissen Zeitdauer das voraus fahrende Fahrzeug verzögert, dann wird (werden) die Gesamtwarnzeitdauer tWarning und/oder die erste Warnzeitdauer tWarningSignal und/oder die zweite Warnzeitdauer tPartialBrk auf der Basis der dann veränderten Relativbewegungssituation zwischen dem Fahrzeug und vorausfahrenden Fahrzeug gegenüber dem (den) Ausgangswert(en) verkürzt. Im Gegensatz dazu wird (werden) die Gesamtwarnzeitdauer tWarning und/oder die erste Warnzeitdauer tWarningSignal und/oder zweite Warnzeitdauer tPartialBrk verlängert, wenn das voraus fahrende Fahrzeug beschleunigt.

Die zu dem Zeitpunkt, zu dem festgestellt wird, dass die Kollisionsvermeidungsverzögerung aAvoid größer als die Notbremsverzögerung axvEmergencyBraking ist ermittelten oder angepassten Werte für die Gesamtwarnzeitdauer tWarning und/oder für die zweite Warnzeitdauer tPartialBrk werden dann im Rahmen der sich unmittelbar anschließenden Phase der ausgelösten Fahrerwarnung beispielsweise beibehalten.

Gemäß einer alternativen Vorgehensweise kann vorgesehen sein, dass ausgehend von Anfangswerten für die Gesamtwarnzeitdauer tWarning und/oder für die erste Warnzeitdauer tWarningSignal und/oder für die zweite Warnzeitdauer tPartialBrk, die zum Zeitpunkt des Auslösens der Fahrerwarnung vorgegeben sind oder erst auf der Basis der zu diesem Zeitpunkt vorliegenden Relativbewegungssituation zwischen dem Fahrzeug und dem vorausfahrenden Fahrzeug eingestellt werden, die Werte für die Gesamtwarnzeitdauer tWarning und/oder für die erste Warnzeitdauer tWarningSignal und/oder für die zweite Warnzeitdauer tPartialBrk auch nach bereits erfolgter Auslösung der Fahrerwarnung abhängig von der dann jeweils vorliegenden Relativbewegungssituation zwischen dem Fahrzeug und dem voraus fahrenden Fahrzeug angepasst werden. Eine solche Anpassung kann insbesondere einmalig oder in bestimmten Zeitabständen oder zyklisch mehrmalig erfolgen.

Beispielsweise für den Fall, dass nach Auslösung der Fahrerwarnung das voraus fahrende Fahrzeug verzögert, dann werden die Werte für die Gesamtwarnzeitdauer tWarning und/oder für die erste Warnzeitdauer tWarningSignal und/oder für die zweite Warnzeitdauer tPartialBrk auf der Basis der dann vorliegenden und veränderten Relativbewegungssituation zwischen dem Fahrzeug und dem voraus fahrenden Fahrzeug gegenüber den Anfangswerten zum Zeitpunkt der Auslösung der Fahrerwarnung verkürzt. Andernfalls, also wenn nach Auslösung der Fahrerwarnung das voraus fahrende Fahrzeug beschleunigt, so werden die Werte für die Gesamtwarnzeitdauer tWarning und/oder für die erste Warnzeitdauer tWarningSignal und/oder für die zweite Warnzeitdauer tPartialBrk auf der Basis der dann vorliegenden und veränderten Relativbewegungssituation zwischen dem Fahrzeug und dem voraus fahrenden Fahrzeug gegenüber den Anfangswerten zu Beginn der Auslösung der Fahrerwarnung verlängert.

In Fig.2 ist der Abstand (distance) zum vorausfahrenden Fahrzeug in durchgezogener Linie, die Eigengeschwindigkeit des Fahrzeugs in strichpunktierter Linie und die Beschleunigung (acceleration) des Fahrzeugs ebenfalls in durchgezogener Linie dargestellt.

Wenn man auf das Beispiel von Fig.2 bezogen davon ausgeht, dass ausgehend von einer Fahrt des Fahrzeugs mit konstanter Geschwindigkeit von z.B. v₀ = 60 km/h ohne Beschleunigung (a₀ = 0 m/s²) zum Zeitpunkt t₀ = -3,0 s von der Auswerteeinrichtung festgestellt wurde, dass z.B. aufgrund eines verzögernden vorausfahrenden Fahrzeugs der ermittelte Wert für die Kollisionsvermeidungsverzögerung aAvoid größer als die Notbremsverzögerung axvEmergencyBraking wird, so wird die Fahrerwarnung evtl. auch mit automatisch ausgelöstem Notbremsvorgang in Gang gesetzt.

Anhand der zu diesem Zeitpunkt t₀ vorliegenden und anhand der Sensoreinrichtung erfassten Relativbewegungssituation zwischen dem Fahrzeug und dem vorausfahrenden Fahrzeug wird dann hier beispielsweise die dynamische erste Warnzeitdauer tWarningSignal für die Fahrerwarnung ermittelt und mittels eines in die Auswerteeinrichtung integrierten Zeitzählers überwacht. Wenn dann hier beispielsweise der Abstand (distance) zum vorausfahrenden Fahrzeug weiter abnimmt, z.B., weil dieses weiter verzögert wird und der Fahrer während der ersten Warnzeitdauer tWarningSignal nicht auf die von der Auswerteeinrichtung initiierten und von der Signaleinrichtung ausgegebenen optischen und/oder akustischen Signale reagiert, so bleiben die Geschwindigkeit (speed) und die Beschleunigung (acceleration) des Fahrzeugs während dieser Zeitphase (warning phase) unverändert.

Wenn nach Ablauf der ersten Warnzeitdauer tWarningSignal noch kein Bremseingriff seitens des Fahrers erfolgt ist, so greift die Auswerteeinrichtung zum Zeitpunkt t = - 2,2 s (Beginn der zweiten Warnzeitdauer tPartialBrk) durch eine von ihr initiierte Teilbremsung ein, wodurch die Geschwindigkeit (speed) und der Abstand zum vorausfahrenden Fahrzeug reduziert werden. Weiterhin erfährt das Fahrzeug während der zweiten Warnzeitdauer tPartialBrk eine gewisse Teilbremsverzögerung von beispielsweise - 3 m/s².

Wenn dann nach Ablauf der zweiten Warnzeitdauer tPartialBrk immer noch kein Bremseingriff seitens des Fahrers erfolgt ist, so greift die Auswerteeinrichtung zum Zeitpunkt t = -0,8 s (Beginn des automatischen Notbremsvorgangs) durch eine von ihr initiierte Vollbremsung ein, wodurch die Geschwindigkeit (speed) und der Abstand zum vorausfahrenden Fahrzeug noch weiter reduziert werden, bis zum Zeitpunkt t = 0,0 s ein geringfügiger zu erzielender Mindestabstand zum vorausfahrenden Fahrzeug erreicht ist. Weiterhin erfährt das Fahrzeug während der zweiten Warnzeitdauer tPartialBrk eine Vollbremsverzögerung von beispielsweise -6 m/s².

Bei dem anhand von Fig.2 erläuterten Ausführungsbeispiel des Verfahrens wird die zu dem Zeitpunkt t₀ = -3,0 s, zu dem festgestellt wird, dass die Kollisionsvermeidungsverzögerung aAvoid größer als die Notbremsverzögerung axvEmergencyBraking ist, ein der zu diesem Zeitpunkt t₀ vorliegenden Relativbewegungssituation zwischen Fahrzeug und vorausfahrendem Fahrzeug entsprechender Wert für die erste Warnzeitdauer tWarningSignal festgelegt.

Alternativ hierzu könnte auch der Wert für die erste Warnzeitdauer tWarningSignal auch nach erfolgter Auslösung der Fahrerwarnung zum Zeitpunkt t₀ = -3,0 s an die laufende bzw. sich demgegenüber ändernde Relativbewegungssituation zwischen dem Fahrzeug und dem vorausfahrenden Fahrzeug durch die Auswerteeinrichtung 4 angepasst werden, z.B. wenn das vorausfahrende Fahrzeug während der laufenden ersten Warnzeitdauer tWarningSignal etwa noch weiter verzögert oder beschleunigt wird. Im ersten Fall kann dann die Gesamtwarnzeitdauer tWarning von der Auswerteeinrichtung 4 verkürzt und im zweiten Fall verlängert werden. Generell kann die Anpassung einer Warnzeitdauer tWarning, tWarningSignal und/oder tPartialBrk in beliebiger Weise erfolgen, also proportional oder auch nicht linear in Abhängigkeit von der Relativbewegungssituation.

### Bezugszeichenliste

- 1: Vorrichtung
- 2: Sensoreinrichtung
- 4: Auswerteeinrichtung
- 6: Vergleicher

## Patentansprüche

1. Verfahren zur Auslösung eines selbsttätigen Notbremsvorgangs bei einem Fahrzeug zur Vermeidung eines Auffahrens auf ein Hindernis, wobei eine Fahrerwarnung ausgelöst wird, wenn wenigstens eine Warnbedingung erfüllt ist, wobei die Erfüllung der Warnbedingung angibt, dass aufgrund der momentanen Fahrsituation des Fahrzeugs relativ zum Hindernis der selbsttätige Notbremsvorgang auszulösen ist, wobei der selbsttätige Notbremsvorgang erst nach Auslösung der Fahrerwarnung und anschließendem Ablauf einer Warnzeitdauer (tWarning) ausgelöst wird, wobei die Warnzeitdauer (tWarning) abhängig von einer anhand einer Sensoreinrichtung (2) erfassten Relativbewegungssituation zwischen dem Fahrzeug und dem Hindernis eingestellt und/oder abhängig von einer sich zeitlich ändernden und anhand der Sensoreinrichtung (2) erfassten Relativbewegungssituation zwischen dem Fahrzeug und dem Hindernis angepasst wird, **dadurch gekennzeichnet, dass**
a) eine Anfangs-Warnzeitdauer (tWarningo) zum Zeitpunkt des Auslösens der Fahrerwarnung auf der Basis der zu diesem Zeitpunkt vorliegenden Relativbewegungssituation zwischen dem Fahrzeug und dem Hindernis eingestellt und dann nicht mehr verändert wird, oder dass
b) ausgehend von einer Anfangs-Warnzeitdauer (TWarningo), die zum Zeitpunkt des Auslösens der Fahrerwarnung vorgegeben ist oder erst auf der Basis der zu diesem Zeitpunkt vorliegenden Relativbewegungssituation zwischen dem Fahrzeug und dem Hindernis eingestellt wird, die Warnzeitdauer (tWarning) nach bereits erfolgter Auslösung der Fahrerwarnung abhängig von der dann jeweils vorliegenden Relativbewegungssituation zwischen dem Fahrzeug und dem Hindernis angepasst wird, wobei
b1) für den Fall, dass nach Auslösung der Fahrerwarnung das Hindernis verzögert, die Warnzeitdauer (tWarning) auf der Basis der dann vorliegenden Relativbewegungssituation zwischen dem Fahrzeug und dem Hindernis gegenüber der Anfangs-Warnzeitdauer (tWarningo) verkürzt wird, und/oder
b2) für den Fall, dass nach Auslösung der Fahrerwarnung das Hindernis beschleunigt, die Warnzeitdauer (tWarning) auf der Basis der dann vorliegenden Relativbewegungssituation zwischen dem Fahrzeug und dem Hindernis gegenüber der Anfangs-Warnzeitdauer (tWarningo) verlängert wird.

2. Verfahren nach einem der vorhergehenden Ansprüche, **dadurch gekennzeichnet, dass** die Warnzeitdauer (tWarning) zyklisch eingestellt oder angepasst wird.

3. Verfahren nach einem der vorhergehenden Ansprüche, **dadurch gekennzeichnet, dass** bei der Relativbewegungssituation zwischen dem Fahrzeug und dem Hindernis wenigstens eine der folgenden Größen berücksichtigt wird:
Die Geschwindigkeit und/oder die Beschleunigung des Fahrzeugs in Fahrtrichtung und/oder quer zur Fahrtrichtung, die Geschwindigkeit und/oder die Beschleunigung des Hindernisses in Fahrtrichtung und/oder quer zur Fahrtrichtung, die Relativgeschwindigkeit und/oder die Relativbeschleunigung zwischen dem Fahrzeug und dem Hindernis in Fahrtrichtung und/oder quer zur Fahrtrichtung, der Abstand zwischen dem Fahrzeug und dem Hindernis in Fahrtrichtung und/oder quer zur Fahrtrichtung.

4. Verfahren nach einem der vorhergehenden Ansprüche, **dadurch gekennzeichnet, dass** die Warnzeitdauer (tWarning) als Gesamtwarnzeitdauer eine erste Warnzeitdauer (tWarningSignal) und eine zweite Warnzeitdauer (tPartialBrk) beinhaltet, wobei während der ersten Warnzeitdauer (tWarningSignal) optische und/oder akustische Signale ausgegeben werden und im Rahmen der sich an die erste Warnzeitdauer unmittelbar anschließende zweite Warnzeitdauer (tPartialBrk) eine Teilbremsung mit einer Teilbremsverzögerung kleiner als eine maximale Notbremsverzögerung durchgeführt wird.

5. Verfahren nach Anspruch 4, **dadurch gekennzeichnet, dass** die Gesamtwarnzeitdauer (tWarning) und/oder die erste Warnzeitdauer (tWarningSignal) und/oder die zweite Warnzeitdauer (tPartialBrk) abhängig von der Relativbewegungssituation zwischen dem Fahrzeug und dem Hindernis eingestellt und/oder abhängig von einer sich zeitlich ändernden Relativbewegungssituation zwischen dem Fahrzeug und dem Hindernis eingestellt oder angepasst wird/werden.

6. Vorrichtung (1) zur Durchführung eines selbsttätigen Notbremsvorgangs bei einem Fahrzeug zur Vermeidung eines Auffahrens auf ein Hindernis, welche eine Auswerteeinrichtung (4) und eine Sensoreinrichtung (2) beinhaltet, wobei von der Auswerteeinrichtung (4) eine Fahrerwarnung ausgelöst wird, wenn wenigstens eine in der Auswerteeinrichtung (4) abgelegte Warnbedingung erfüllt ist, wobei die Erfüllung der Warnbedingung angibt, dass aufgrund der momentanen Fahrsituation des Fahrzeugs relativ zum Hindernis der selbsttätige Notbremsvorgang auszulösen ist, wobei der selbsttätige Notbremsvorgang von der Auswerteeinrichtung (4) erst nach Auslösung der Fahrerwarnung und anschließendem Ablauf einer Warnzeitdauer (tWarning) ausgelöst wird, wobei die Auswerteeinrichtung (4) ausgebildet ist, dass sie die Warnzeitdauer (tWarning) abhängig von einer anhand der Sensoreinrichtung (2) erfassten Relativbewegungssituation zwischen dem Fahrzeug und dem Hindernis einstellt und/oder abhängig von einer sich zeitlich ändernden, anhand einer Sensoreinrichtung erfassten Relativbewegungssituation zwischen dem Fahrzeug und dem Hindernis anpasst, **dadurch gekennzeichnet, dass** die Auswerteeinrichtung (4) weiterhin ausgebildet ist, dass sie
a) eine Anfangs-Warnzeitdauer (tWarningo) zum Zeitpunkt des Auslösens der Fahrerwarnung auf der Basis der zu diesem Zeitpunkt vorliegenden Relativbewegungssituation zwischen dem Fahrzeug und dem Hindernis einstellt und dann nicht mehr verändert, oder dass sie
b) ausgehend von einer Anfangs-Warnzeitdauer (TWarningo), die sie zum Zeitpunkt des Auslösens der Fahrerwarnung vorgibt oder erst auf der Basis der zu diesem Zeitpunkt vorliegenden Relativbewegungssituation zwischen dem Fahrzeug und dem Hindernis einstellt, die Warnzeitdauer (tWarning) nach bereits erfolgter Auslösung der Fahrerwarnung abhängig von der dann jeweils vorliegenden Relativbewegungssituation zwischen dem Fahrzeug und dem Hindernis anpasst, wobei sie
b1) für den Fall, dass nach Auslösung der Fahrerwarnung das Hindernis verzögert, die Warnzeitdauer (tWarning) auf der Basis der dann vorliegenden Relativbewegungssituation zwischen dem Fahrzeug und dem Hindernis gegenüber der Anfangs-Warnzeitdauer (tWarningo) verkürzt, und/oder
b2) für den Fall, dass nach Auslösung der Fahrerwarnung das Hindernis beschleunigt, die Warnzeitdauer (tWarning) auf der Basis der dann vorliegenden Relativbewegungssituation zwischen dem Fahrzeug und dem Hindernis gegenüber der Anfangs-Warnzeitdauer (tWarningo) verlängert.

7. Fahrzeug mit einer Vorrichtung nach Anspruch 6.

## Claims

1. Method for triggering an automatic emergency braking process in a vehicle in order to avoid running into an obstacle, wherein a warning to the driver is triggered if at least one warning condition is fulfilled, wherein the fulfilment of the warning condition indicates that owing to the driving situation of the vehicle relative to the obstacle at the time, the automatic emergency braking process should be triggered, wherein the automatic emergency braking process is only triggered after the warning to the driver has been issued and a warning time interval (tWarning) has then elapsed, wherein the warning interval (tWarning) is set as a function of a relative movement situation between the vehicle and the obstacle detected with reference to a sensor device (2) and/or is adapted as a function of a relative movement situation between the vehicle and the obstacle, detected by the sensor device (2), which varies with time, **characterised in that**
a) an initial warning interval (tWarning₀) is set at the time when the warning to the driver is triggered on the basis of the relative movement situation existing at that time between the vehicle and the obstacle, and the said interval is then no longer changed, or
b) starting form an initial warning interval (tWarningo) which is specified at the time when the warning to the driver is triggered, or only set on the basis of the relative movement situation between the vehicle and the obstacle existing at that time, the warning interval (tWarning) is adapted after the warning to the driver has already been triggered as a function of the then existing relative movement situation between the vehicle and the obstacle, wherein
b1) in the case when after the warning to the driver has been triggered the obstacle slows down, the warning interval (tWarning) is made shorter compared with the initial warning interval (tWarning₀) on the basis of the then existing relative movement situation between the vehicle and the obstacle, and/or
b2) in the case when after the warning to the driver has been triggered the obstacle accelerates, the warning interval (tWarning) is made longer compared with the initial warning interval (tWarningo) on the basis of the then existing relative movement situation between the vehicle and the obstacle.

2. Method according to the preceding claim, **characterised in that** the warning interval (tWarning) is set or adapted cyclically.

3. Method according to either of the preceding claims, **characterised in that** as regards the relative movement situation between the vehicle and the obstacle, at least one of the following variables is taken into account:
the speed and/or acceleration of the vehicle in the travel direction and/or transversely to the travel direction, the speed and/or acceleration of the obstacle in the travel direction and/or transversely to the travel direction, the relative speed and/or relative acceleration between the vehicle and the obstacle in the travel direction and/or transversely to the travel direction, and the distance between the vehicle and the obstacle in the travel direction and/or transversely to the travel direction.

4. Method according to any of the preceding claims, **characterised in that** the warning interval (tWarning) is a total warning interval containing a first warning interval (tWarningSignal) and a second warning interval (tPartialBrk), wherein during the first warning interval (tWarningSignal) visual and/or acoustic signals are issued and within the scope of the second warning interval (tPartialBrk) that immediately follows the first warning interval, a partial braking operation with a partial braking deceleration smaller than a maximum emergency braking deceleration is carried out.

5. Method according to Claim 4, **characterised in that** the total warning interval (tWarning) and/or the first warning interval (tWarningSignal) and/or the second warning interval (tPartialBrk) are set as a function of the relative movement situation between the vehicle and the obstacle, and/or set or adapted as a function of a relative movement situation between the vehicle and the obstacle that varies with time.

6. Device for carrying out an automatic emergency braking process in a vehicle in order to avoid running into an obstacle, which device comprises an evaluation device (4) and a sensor device (2), wherein a warning to the driver is triggered by the evaluation device (4) if at least one warning condition stored in the evaluation device (4) is fulfilled, wherein the fulfilment of the warning component indicates that owing to the driving situation of the vehicle relative to the obstacle at the time the automatic emergency braking process should be triggered, wherein the automatic emergency braking process is only triggered by the evaluation device (4) after the warning to the driver has been issued and a warning time interval (tWarning) has then elapsed, wherein the evaluation device (4) is designed such that it sets the warning interval (tWarning) as a function of a relative movement situation between the vehicle and the obstacle detected with reference to the sensor device (2), and/or is adapted as a function of a relative movement situation between the vehicle and the obstacle, detected by a sensor device, which varies with time, **characterised in that** the evaluation device (4) is furthermore designed such that
a) it sets an initial warning interval (tWarning₀) at the time when the warning to the driver is triggered on the basis of the relative movement situation existing at that time between the vehicle and the obstacle and the said interval is then no longer changed, or
b) starting form an initial warning interval (tWarning₀) which is specified at the time when the warning to the driver is triggered, or only set on the basis of the relative movement situation between the vehicle and the obstacle existing at that time, the warning interval (tWarning) is adapted after the warning to the driver has already been triggered as a function of the then existing relative movement situation between the vehicle and the obstacle, wherein
b1) in the case when after the warning to the driver has been triggered the obstacle slows down, the warning interval (tWarning) is made shorter compared with the initial warning interval (tWarning₀) on the basis of the then existing relative movement situation between the vehicle and the obstacle, and/or
b2) in the case when after the warning to the driver has been triggered the obstacle accelerates, the warning interval (tWarning) is made longer compared with the initial warning interval (tWarningo) on the basis of the then existing relative movement situation between the vehicle and the obstacle.

7. Vehicle with a device according to Claim 6.

## Revendications

1. Procédé de déclenchement d'une opération automatique de freinage d'urgence d'un véhicule, afin d'empêcher de heurter un obstacle, dans lequel on déclenche un avertissement au conducteur si au moins une condition d'avertissement est satisfaite, dans lequel satisfaire la condition d'avertissement indique que, en raison de la situation instantanée de marche du véhicule par rapport à l'obstacle, il faut déclencher l'opération automatique de freinage d'urgence, dans lequel l'opération automatique de freinage d'urgence n'est déclenchée qu'après déclenchement de l'avertissement au conducteur et écoulement ensuite d'une durée d'avertissement (tWarning), dans lequel on règle la durée d'avertissement (tWarning) en fonction d'une situation de déplacement relative, détectée à l'aide d'un dispositif (2) de détection, entre le véhicule et l'obstacle et/ou on l'adapte en fonction d'une situation de déplacement relative, se modifiant avec le temps et détectée à l'aide du dispositif (2) de détection, entre le véhicule et l'obstacle, **caractérisé en ce que**
a) on règle une durée d'avertissement initiale (tWarningo) à l'instant du déclenchement de l'avertissement au conducteur sur la base de la situation de déplacement relative, présente à cet instant, entre le véhicule et l'obstacle et ensuite on ne la modifie plus, ou
b) à partir d'une durée d'avertissement initiale (tWarning₀), qui est prescrite à l'instant du déclenchement de l'avertissement au conducteur ou que l'on règle seulement sur la base de la situation de déplacement relative, présente à cet instant, entre le véhicule et l'obstacle, on adapte la durée d'avertissement (tWarning), après un déclenchement déjà effectué de l'avertissement au conducteur, en fonction de la situation de déplacement relative, alors présente respectivement, entre le véhicule et l'obstacle, dans lequel
b1) dans le cas où après le déclenchement de l'avertissement au conducteur l'obstacle décélère, on écourte, par rapport à la durée d'avertissement initiale (tWarning₀) , la durée d'avertissement (tWarning) sur la base de la situation de déplacement relative, alors présente, entre le véhicule et l'obstacle et/ou
b2) dans le cas où après le déclenchement de l'avertissement au conducteur l'obstacle accélère, on allonge, par rapport à la durée d'avertissement initiale (tWarning₀), la durée d'avertissement (tWarning) sur la base de la situation de déplacement relative, alors présente, entre le véhicule et l'obstacle.

2. Procédé suivant l'une des revendications précédentes, **caractérisé en ce que** l'on règle ou on adapte cycliquement la durée d'avertissement (tWarning).

3. Procédé suivant l'une des revendications précédentes, **caractérisé en ce que**, dans la situation de déplacement relative entre le véhicule et l'obstacle, on prend en compte au moins l'une des grandeurs suivantes : la vitesse et/ou l'accélération du véhicule dans le sens de la marche et/ou transversalement au sens de la marche, la vitesse et/ou l'accélération de l'obstacle dans le sens de la marche et/ou transversalement au sens de la marche, la vitesse relative et/ou l'accélération relative entre le véhicule et l'obstacle dans le sens de marche et/ou transversalement au sens de la marche, la distance entre le véhicule et l'obstacle dans le sens de la marche et/ou transversalement au sens de la marche.

4. Procédé suivant l'une des revendications précédentes, **caractérisé en ce que** la durée d'avertissement (tWarning) contient, comme durée d'avertissement d'ensemble, une première durée d'avertissement (tWarningSignal) et une deuxième durée d'avertissement (tPartialBrk), dans lequel, pendant la première durée d'avertissement (tWarningSignal), on émet des signaux optiques et/ou acoustiques et, dans le cadre de la deuxième durée d'avertissement (tPartialBrk), se raccordant immédiatement à la première durée d'avertissement, on effectue un freinage partiel à une décélération de freinage partielle plus petite qu'une décélération de freinage d'urgence maximum.

5. Procédé suivant la revendication 4, **caractérisé en ce que** l'on règle la durée d'avertissement d'ensemble (tWarning) et/ou la première durée d'avertissement (tWarningSignal) et/ou la deuxième durée d'avertissement (tPartialBrk) en fonction de la situation de déplacement relative entre le véhicule et l'obstacle et/ou on la ou les règle ou adapte en fonction d'une situation de déplacement relative, se modifiant avec le temps, entre le véhicule et l'obstacle.

6. Système (1) pour effectuer une opération automatique de freinage d'urgence d'un véhicule, pour empêcher de heurter un obstacle, qui comporte un dispositif (4) d'exploitation et un dispositif (2) de capteur, dans lequel on déclenche, par le dispositif (4) d'exploitation, un avertissement au conducteur si au moins une condition d'avertissement, mise dans le dispositif (4) d'exploitation, est satisfaite, dans lequel la satisfaction de la condition d'avertissement indique que, sur la base de la situation instantanée de marche du véhicule par rapport à l'obstacle, il faut déclencher l'opération automatique de freinage d'urgence, dans lequel on déclenche l'opération automatique de freinage d'urgence par le dispositif (4) d'exploitation seulement après déclenchement de l'avertissement au conducteur et écoulement ensuite d'une durée d'avertissement (tWarning), dans lequel le dispositif (4) d'exploitation est constitué de manière à régler la durée d'avertissement (tWarning) en fonction d'une situation de déplacement relative, détectée à l'aide du dispositif (2) de détection, entre le véhicule et l'obstacle et/ou l'adapte en fonction d'une situation de déplacement relative, se modifiant avec le temps et détectée à l'aide d'un dispositif de détection, entre le véhicule et l'obstacle, **caractérisé en ce que** le dispositif (4) d'exploitation est constitué en outre de manière
a) à régler une durée d'avertissement initiale (tWarning₀) à l'instant du déclenchement de l'avertissement au conducteur sur la base de la situation de déplacement relative, présente à cet instant, entre le véhicule et l'obstacle et ensuite à ne plus la modifier, ou
b) à partir d'une durée d'avertissement initiale (tWarning₀), qu'il prescrit à l'instant du déclenchement de l'avertissement au conducteur ou qu'il règle seulement sur la base de la situation de déplacement relative, présente à cet instant, entre le véhicule et l'obstacle, à adapter la durée d'avertissement (tWarning), après un déclenchement déjà effectué de l'avertissement au conducteur, en fonction de la situation de déplacement relative, alors présente respectivement, entre le véhicule et l'obstacle, dans lequel
b1) dans le cas où, après déclenchement de l'avertissement au conducteur, l'obstacle décélère, à écourter, par rapport à la durée d'avertissement initiale (tWarning₀), la durée d'avertissement (tWarning) sur la base de la situation de déplacement relative, alors présente, entre le véhicule et l'obstacle, et/ou
b2) dans le cas où, après déclenchement de l'avertissement au conducteur, l'obstacle accélère, à allonger, par rapport à la durée d'avertissement initiale (tWarning₀) , la durée d'avertissement (tWarning) sur la base de la situation de déplacement relative, alors présente, entre le véhicule et l'obstacle.

7. Véhicule ayant un système suivant la revendication 6.
